# EUROPEAN PATENT SPECIFICATION

(11) **EP 0 769 107 B1**
(45) Date of publication and mention of the grant of the patent: **02.06.1999**
(21) Application number: 93919779.4
(22) Date of filing: 31.08.1993
(51) Int. Cl.: F16B 37/08

(54) **SCREW-AND-NUT JOINT**
SCHRAUBE- MUTTER VERBINDUNG
RACCORD VIS ET ECROU

(30) Priority: 31.08.1992 SE 9202492
(43) Date of publication of application: 23.04.1997
(73) Proprietor: ARROW PLASTIC AB, S-424 05 Angered (SE)
(72) Inventor: LARSSON, Nils, S-421 68 Västra Frölunda (SE)
(74) Representative: Roth, Ernst Adolf Michael
(86) International application number: SE9300714
(87) International publication number: WO9405919

(56) References cited:
- WO-A-88/01024
- DE-A- 2 723 058
- US-A- 2 172 461
- DERWENT'S ABSTRACT, No. 83-739314/33, week 8333; & SU,A,964 284 (GUZENKO YUM), 7 October 1982.
- DERWENT'S ABSTRACT, No. N1110D/51, week 8151; & SU,A,812 996 (METAL CUT MACHINES), 20 March 1981.

## Description

The present invention refers to a screw-nut-joint of the kind, which comprises a self-locking nut, which is quickly disengagable from a screw, which nut is equipped with, an axial slot extending through the wall of the nut itself, the wall having a peripheral extent which somewhat exceeds 180°, and the width of the slot is somewhat smaller than the diameter of the screw, the nut having the property of substantially regaining its original form, when the form altering forces cease, and which allows the nut to be snapped on and off the screw via the slot.

### BACKGROUND OF THE INVENTION

Lock-nuts of the initially mentioned kind are known, for instance through CH-A-141119, GB-A-371,109 and WO-A-88/01024. Common for these is that the conical projection of the slotted nut in cooperation with a corresponding conical recess in a washer or other machine part is exposed to a radial clamping effect, which makes the nut being clamped thereby being locked to the screw.

In many applications is required a proportionately long screw to cover different occurring thicknesses of the part that the screw-nut-joint shall join. This implies that, with insignificant thicknesses, the lock-nut must be relocated a relatively long distance along the screw, which, specially when the nut is difficult to access, is a troublesome and time-consuming procedure.

It is known from DE-A-2 723 058 to provide a nut with a slot which enables the nut to be snap-fitted onto a threaded member.

### THE PURPOSE AND MOST IMPORTANT FEATURES OF THE INVENTION

The purpose of the present invention is to provide a screw-nut-joint, where the nut can be quickly relocated to an operative position along the screw, without deteriorating the lock function of the nut on the screw. These tasks have been solved in that the nut is produced of an elastic plastic material, that the nut at one of its ends is equipped with a conical extenstion for cooperation with a corresponding conical recess in a washer or construction member, that the taper of the extension and the washer is so chosen, that when the nut is thightened a pressure from the wall of the nut is received around the screw, and that the nut is a wing nut.

### DESCRIPTION OF THE DRAWINGS

Below the invention will be described closer with reference to embodiments with reference of the drawings.

Figure 1 discloses partly in cross-section a screw-nut-joint.
Figure 2 is a cross-section along the line II-II in fig. 1.
Figure 3 reveals in perspective an embodiment of the lock-nut.

### DESCRIPTION OF EMBODIMENTS

The screw-nut-joint 10 according to the invention includes a screw 11, a nut 12, a washer 13 and a construction part 14, which is included in the design to be jointed by the screw-nut-joint.

The screw 11 is of conventional type and equipped with outer threads 15. The nut 12 is at one of its ends equipped with a tapered portion 16, which cooperates with a corresponding conical recess 17 in the washer 13. The conical recess has the form ofa frustrum of a cone. The nut and its portion are provided with an axial slot 18 so that these part form an open ring. This surrounds the screw circumferentially over somewhat more than 180°, while the width of the slot is somewhat smaller than the screw's outer diameter, while the taper of the portion 16 and the washer is so determined that when the nut is thightened a pressure from the wall of the nut is received around the screw.

The nut is produced of an elastic plastic material, which has the characteristic to return to original form, when the form-altering forces cease to act. The shanks of the open ring are consequently elastic, which means that the nut can be snapped on or offthe screw in proper position along the screw. Consequently one does not need to screw the nut in a proper position, but can snap it on and off in an appropriate place.

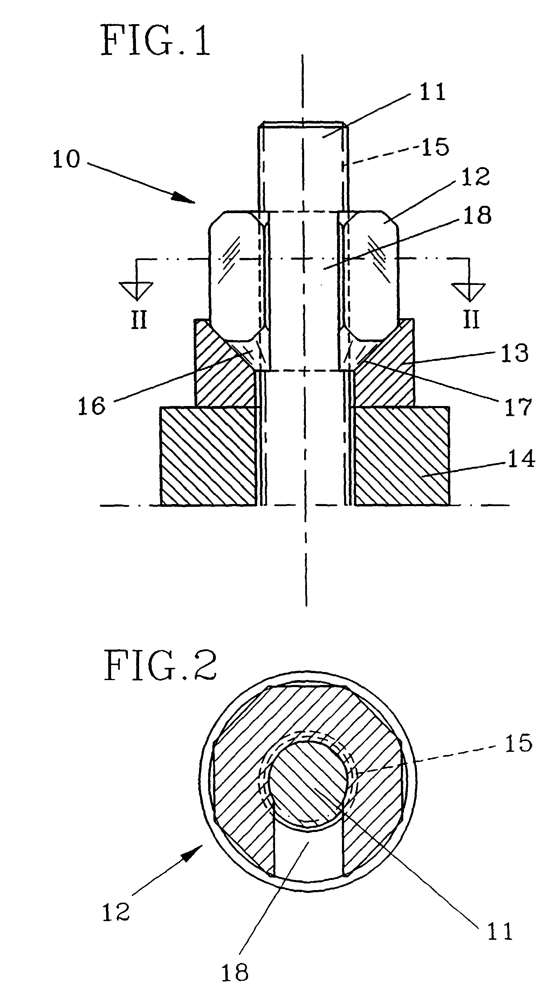

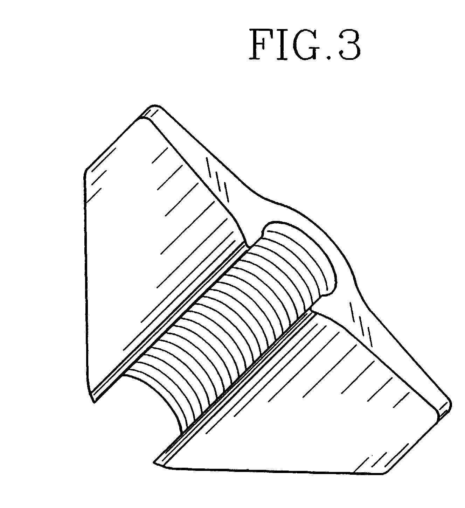

In the invention the nut is designed as a wing nut, such as shown in figure 3. The conical recess, can be arranged separately in a washer, such as shown in figure 1, but it can also be arranged directly on the construction part, if it is appropriate.

The invention is not limited to the shown embodiments, but several variations are conceivable within the scope of the claims.

The reference numeral
- 10: Screw-nut-joint
- 11: Screw
- 12: Nut
- 13: Washer
- 14: Construction part
- 15: Outer threads
- 16: Extension
- 17: Recess
- 18: Slot

## Claims

1. Screw-nut-joint of the kind, which comprises a nut (12) which is quickly engagable and disengagable on a screw (11),
which nut is equipped with, an axial slot (18) extending through the wall of the nut itself,
the wall having a peripheral extent which somewhat exceeds 180°,
and the width of the slot (18) is somewhat smaller than the diameter of the screw (11)
the nut (12) having the property of substantially regaining its original form, when the form altering forces cease, and which allows the nut to be snapped on and off the screw via the slot,
characterized in that,
the nut (12) is produced of an elastic plastic material,
that the nut at one of its ends is equipped with a conical extension (16) for cooperation with a corresponding conical recess (17) in a washer (13) or construction member (14),
that the taper of the extension (16) and the washer (13) is so chosen, that when the nut is tightened a pressure from the wall of the nut is received around the screw, and
that the nut (12) is a wing nut.

## Patentansprüche

1. Schraube-Mutter-Verbindung mit einer Mutter (12), die auf der Schraube (11) schnell befestig- und ablösbar ist, bei der,
- die Mutter einen axialen, die Wand der Mutter durchdringenden Schlitz (18) aufweist,
- die Wand einen 180° etwas überschreitenden Außenumfang hat,
- und die Weite des Schlitzes (18) etwas kleiner als der Durchmesser der Schraube (11) ist,
- wobei die Muter (12) die Eigenschaft hat, im wesentlichen ihre ursprüngliche Form wiederzugewinnen, wenn die die Form ändernden Kräfte aufhören und die es ermöglicht, die Mutter über den Schlitz auf die Schraube aufzuklipsen bzw. von ihr abzuziehen,
**dadurch gekennzeichnet**, dass
- die Mutter (12) aus einem elastischen Kunststoff hergestellt ist,
- dass die Mutter an einem ihrer Enden mit einer konischen Anformung (16) versehen ist, zum Zusammenwirken mit einer entsprechenden Vertiefung (17) in einer Zwischenlagscheibe (13) oder Konstruktionsteil (14),
- dass der konische, mit Schraubgewinde versehene Teil der Anformung (16) und der Zwischenlagscheibe (13) so gewählt sind, dass bei angezogener Mutter ein rings um die Schraube herum erfolgender Druck von der Wand der Mutter aufgenommen wird, und
- dass die Mutter (12) eine Flügelmutter ist.

## Revendications

1. Raccord vis-écrou du type comprenant un écrou (12) qui est rapidement encliquetable et désencliquetable sur une vis (11),
l'écrou étant muni d'une fente axiale (18) traversant la paroi de l'écrou lui-même,
la paroi ayant une extension périphérique excédant légèrement 180°,
et la largeur de la fente (18) étant légèrement inférieure au diamètre de la vis (11),
l'écrou (12) ayant la propriété de reprendre globalement sa forme originale lorsque les forces déformantes cessent, et permettant à l'écrou d'être instantanément encliqueté et désencliqueté de la vis via la fente,
***caractérisé en ce que***
l'écrou (12) est fabriqué en matériau plastique élastique,
***en ce que*** l'écrou à une de ses extrémités est muni d'une extension conique (16) destinée à coopérer avec un évidement conique correspondant (17) d'une rondelle de blocage(13) ou d'un élément de construction (14),
***en ce que*** la conicité de l'extension (16) et de la rondelle de blocage (13) est choisie de façon que, lorsque l'écrou est vissé, une pression de la paroi de l'écrou soit reçue autour de la vis, et
***en ce que*** l'écrou (12) est un écrou à oreilles.
